# EUROPÄISCHE PATENTSCHRIFT

(11) **EP 0 937 939 B1**
(45) Veröffentlichungstag und Bekanntmachung des Hinweises auf die Patenterteilung: **02.08.2000**
(21) Anmeldenummer: 99101644.5
(22) Anmeldetag: 04.02.1999
(51) Int. Cl.: F16L 59/06

(54) **Verfahren zur Isolierung von gekrümmten Flächen**
Method of insulation of curved surfaces
Méthode d'isolation pour surfaces courbes

(30) Priorität: 19.02.1998 DE 19806993; 13.08.1998 DE 19836830
(43) Veröffentlichungstag der Anmeldung: 25.08.1999
(73) Patentinhaber: Wacker-Chemie GmbH, 81737 München (DE)
(72) Erfinder: Eyhorn, Thomas, 87452 Altusried (DE); Klaus, Johann, 87477 Sulzberg (DE); Kratel, Günter, Dr., 87472 Durach (DE); van Gucht, Baudewijn, 2880 Bornem (BE)
(74) Vertreter: Rimböck, Karl-Heinz, Dr.

(56) Entgegenhaltungen:
- EP-A- 0 069 543
- EP-A- 0 090 191
- DE-A- 1 954 992
- DE-A- 3 630 399
- DE-A- 4 432 896
- DE-A- 19 652 731

## Beschreibung

Gegenstand der Erfindung ist ein Verfahren zur Wärmeisolierung von gekrümmten Flächen, insbesondere von Rohren unter Verwendung eines wärmedämmenden Formkörpers, der verpreßtes und gegebenenfalls gehärtetes, mikroporöses Isoliermaterial in einer oder mehreren umhüllten und evakuierten Schichten enthält und eine Oberfläche mit Lamellenstruktur aufweist, wobei die Lamellen eine Tiefe von 40 bis 95% der Dicke des Formkörpers besitzen.

In der DE-4432896 A1 ist ein evakuierter und in einer Hülle gasdicht eingeschlossener, wärmedämmender Formkörper auf der Basis von verpreßtem und gegebenenfalls gehärtetem, mikroporösem Isoliermaterial offenbart.

Die EP-69543 A2 offenbart einen Formkörper zur Isolierung von Rohren.

Zur Wärmeisolierung von Körpern mit gekrümmten Flächen mit einem Förmkörper, insbesondere von Rohren und Zylindern, ist ein hoher Kraftaufwand notwendig, um den Formkörper an eine gekrümmte Fläche anzuschmiegen. Die Bedeckung der Fläche bleibt wegen der Steifigkeit des Materials und der vorhandenen maßlichen Toleranzen der Oberfläche meist unvollständig. Dies und der unvermeidbare Faltenwurf beim Anschmiegen des Formkörpers an die gekrümmte Fläche sind Ursache für eine unvollständige Wärmeisolierung.

Die Verwendung eines dicken Formkörpers zur Wärmeisolierung oder die Wärmeisolierung von stark gekrümmten Flächen ist überhaupt nicht möglich, wenn sich der Formkörper nicht oder nicht ausreichend biegen läßt.

Die vorliegende Erfindung zeigt ein Verfahren auf, mit dem eine effektive Wärmeisolierung von gekrümmten Flächen möglich ist.

Gegenstand der Erfindung ist ein Verfahren zur Isolierung von gekrümmten Flächen mit einem plattenförmigen, evakuierten und wärmedämmenden Formkörper, der verpreßtes und gegebenenfalls gehärtetes, mikroporöses Isoliermaterial in einer oder mehreren umhüllten und evakuierten Schichten enthält und eine Oberfläche mit Lamellenstruktur aufweist, wobei die Lamellen eine Tiefe von 40 bis 95% der Dicke des Formkörpers besitzen, das dadurch gekennzeichnet ist, daß der Förmkörper mit der Oberfläche mit Lamellenstruktur an die gekrümmte Fläche angeschmiegt und fixiert wird und das Vakuum in mindestens einer Schicht aufgehoben wird.

Durch die Lamellenstruktur können auch dickere Formkörper ohne besonderen Kraftaufwand an gekrümmte Flächen angelegt werden, und es können damit auch Flächen mit engem Krümmungsradius wärmeisoliert werden. Verbleibende Undichtigkeiten in der Wärmeisolierung werden dadurch beseitigt oder zumindest reduziert, indem das Vakuum aufgehoben wird. Dadurch vergrößert sich das Volumen des Formkörpers, und wärmedurchlässige Spalten und Ritzen werden verkleinert oder geschlossen.

Wird eine besonders wirksame Wärmeisolierung gefordert, so ist ein mehrschichtiger Aufbau des Formkörpers bevorzugt, bestehend aus zwei bis fünf oder mehr Schichten. Die Schichten können so angeordnet werden, daß ein Versatz in den Stoßstellen stattfindet, so daß eine weitere Reduzierung des Wärmeverlustes die Folge ist.

Die Wärmeleitfähigkeit eines Dämmstoffes kann durch die Verminderung des im System vorhandenen Luftdruckes drastisch gesenkt werden. Die Effizienz eines mikroporösen Dämmstoffes kann bis zum Faktor 10 verbessert werden, wenn der Partialdruck innerhalb des Dämmstoffes unter 5 bis 10 mbar gesenkt wird, wobei die Höhe des Unterdruckes die Wirksamkeit der Wärmedämmung bestimmt.
Eine besonders effiziente Wärmedämmung wird erreicht, wenn der zur Wärmedämmung eingesetzte Formkörper mehrschichtig ausgebildet ist und das Vakuum nicht bei allen Schichten aufgehoben wird, und mindestens eine Schicht in evakuiertem Zustand bleibt. Durch die Verwendung von geeigneten Umhüllungen, beispielsweise mehrschichtigen Folien, kann die Stabilität des verbleibenden Vakuums über Jahre hinweg erhalten bleiben.

Mit einem solchen Formkörper mit evakuierten und nicht evakuierten Schichten können beispielsweise Pipelines wirtschaftlicher und technisch wirkungsvoller isoliert werden, als mit bekannten Systemen.

Durch die Einschnitte in der Oberfläche sowie durch den vorhandenen Unterdruck in der gasdichten Umhüllung wird die Folie, je nach deren Steifigkeit, in die Einschnitte etwas eingezogen. Dadurch kann eine faltenfreie Ummantelung der gekrümmten Oberfläche gewährleistet werden. Beides erhöht die Wirksamkeit der Wärmedämmung.

Die Erfindung wird nachfolgend unter Zuhilfenahme von Figuren näher erläutert.
Figur 1 zeigt eine bevorzugte Ausführungsform des Formkörpers im Querschnitt;
Figur 2 zeigt bevorzugte Querschnittsformen der Lamellen des Formkörpers in vergrößerter Darstellung;
in Figur 3 ist in Draufsicht dargestellt, wie ein Rohr mit dem Formkörper ummantelt wird;
Figur 4 zeigt eine weitere bevorzugte Ausführungsform des Formkörpers im Querschnitt.

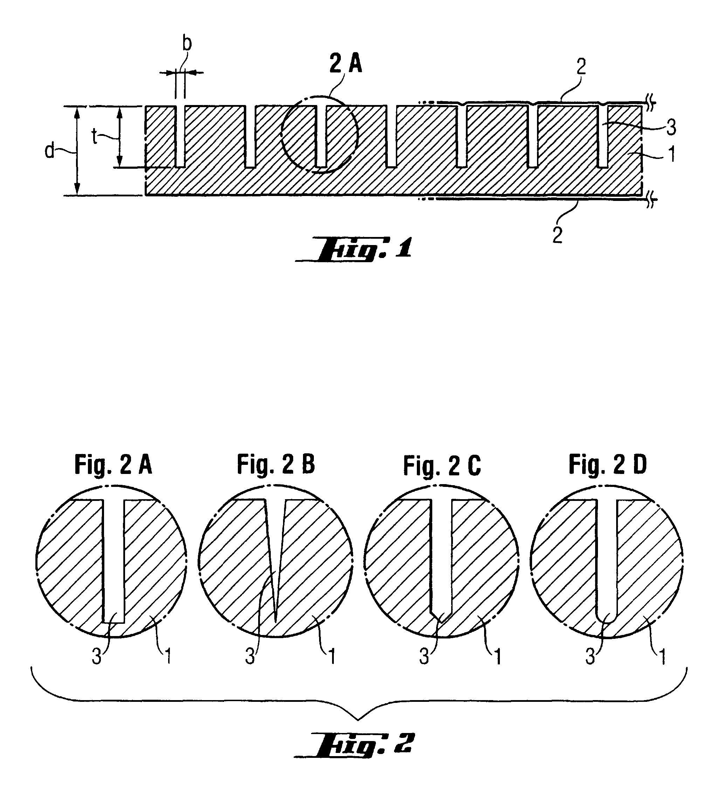

Der Formkörper gemäß Fig.1 ist plattenförmig und besteht vollkommen oder teilweise aus mikroporösem Isoliermaterial 1 und einer gasdichten Umhüllung 2 (nur teilweise und schematisch dargestellt). Er weist eine Oberfläche auf, die durch langgezogene Einschnitte 3 (Lamellen) strukturiert ist Die Lamellen haben eine Tiefe t von 40 bis 95 %, besonders bevorzugt von 60 bis 85 % der Dicke d des Formkörpers. Typisch ist eine Tiefe t von mindestens 5 mm. Die Dicke d des Formkörpers ergibt sich aus der gewünschten Wärmedämmwirkung. Die Notwendigkeit zur Verwendung der Lamellen in den Formkörpern ergibt sich bei Rohren bei Wandstärken > 5% des Rohrdurchmessers bei kleinen Rohren (Durchmesser ca. 50 mm) und > 2% des Rohrdurchmessers bei großen Rohren (Durchmesser mindestens 300 mm). Auch die Steifigkeit des Formkörpers, welche vorwiegend abhängig von dessen Dichte ist, spielt hier eine Rolle. Die Lamellen sind vorzugsweise in einem Abstand von 4 bis 40 mm, besonders bevorzugt von 10 bis 20 mm nebeneinander und vorzugsweise parallel zueinander angeordnet und weisen eine Basisbreite b von 0,5 bis 5 mm, vorzugsweise von 1 bis 3 mm auf. Ihr Querschnitt hat vorzugsweise eine quadratische, rechteckige, spitzwinkelige oder gerundete Form, besonders bevorzugt eine der in Fig.2 gezeigten Formen Fig. 2A - Fig. 2D. Der Abstand zwischen den Lamellen hängt einerseits von der gewählten Basisbreite und andererseits von dem zu erreichenden Innendurchmesser ab. Addiert man die Basisbreiten der einzelnen Lamellen, so sollte sich in etwa der Differenzbetrag zwischen äußerem und innerem Umfang des an der gekrümmten Fläche anliegenden Formkörpers ergeben.

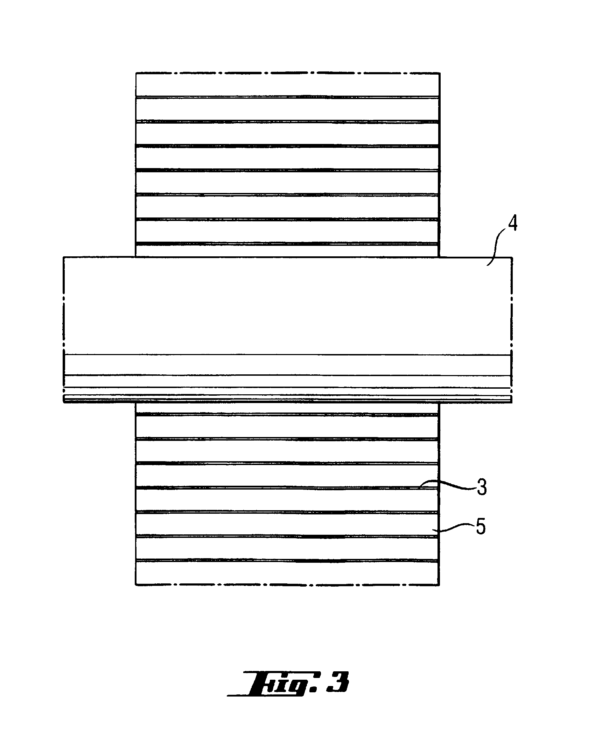

Gemäß der vorliegenden Erfindung wird der Formkörper mit seiner strukturierten Oberfläche an die gekrümmte Fläche angeschmiegt und fixiert und anschließend das Vakuum aufgehoben. Dies ist am Beispiel der Isolierung eines Rohres 4 in Fig.3 angedeutet. Der umhüllte Formkörper 5 wird um das Rohr 4 gelegt, wobei die mit Lamellen versehene Oberfläche auf der Umfangsfläche des Rohres zu liegen kommt. Durch die Lamellenstruktur läßt sich der Formkörper der Kontur des Rohres entsprechend biegen, auch wenn die Dicke d verhältnismäßig groß und/oder der Krümmungsradius des Rohres vergleichsweise klein ist. Das Verfahren wird vorzugsweise zur Isolierung von Rohren, beispielsweise Pipelines für Rohöl und Fernwärmeleitungen, von Motoren, Turbinen und Kaminen eingesetzt.

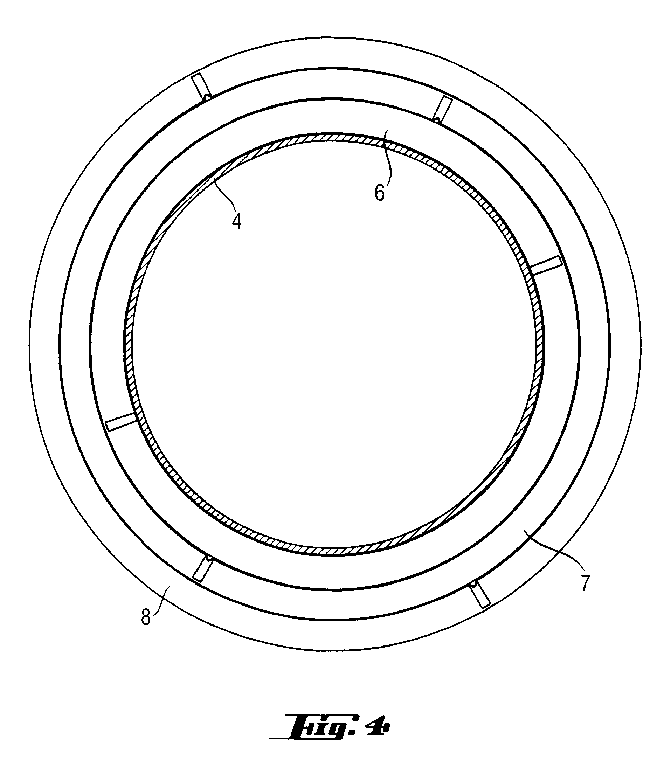

In Figur 4 ist ein Formkörper dargestellt, der aus mehreren umhüllten und evakuierten Schichten (eine innere Schicht 6, eine mittlere Schicht 7 und eine äußere Schicht 8) aufgebaut ist, die verpreßtes und gegebenenfalls gehärtetes, mikroporöses Isoliermaterial enthalten. Zur Isolierung einer gekrümmten Fläche wird der Formkörper mit seiner Oberfläche mit Lamellenstruktur an die gekrümmte Fläche angeschmiegt und fixiert und anschließend das Vakuum in mindestens einer Schicht aufgehoben, wobei bevorzugt ist, daß das Vakuum in mindestens einer anderen Schicht erhalten bleibt. Besonders bevorzugt ist, daß das Vakuum in der an der gekrümmten Fläche anliegenden Schicht aufgehoben und in mindestens einer anderen Schicht dauerhaft beibehalten wird.

Der Formkörper kann in seiner Gesamtheit oder schichtweise beispielsweise auf ein Rohr 4 geklebt oder anderweitig darauf fixiert werden, beispielsweise indem ein Band, vorzugsweise ein Gewebeband oder Klebeband, eine Kunststoffolie oder eine Metallfolie um den am Rohr anliegenden Formkörper oder jeweils eine Schicht des Formkörpers gewickelt wird. Es kann auch ein Metallblech in Form von Ganz- oder Halbschalen oder geeigneten Zuschnitten um das Rohr gelegt und fixiert werden. Das im Formkörper aufrechterhaltene Vakuum wird in mindestens einer der Schichten aufgehoben, um gegebenenfalls bestehen gebliebene Undichtigkeiten der Wärmeisolierung zu reduzieren oder vollkommen zu beseitigen. Beim Aufheben des Vakuums vergrößert sich das Volumen des Formkörpers durch einströmende Luft, und der sich ausdehnende Formkörper kann Fugen und Spalten schließen. Das Vakuum kann aufgehoben werden, indem die Umhüllung der Schicht und gegebenenfalls der den Formkörper fixierende Gegenstand mit einem Werkzeug absichtlich beschädigt wird oder auch indem die Umhüllung durch Einwirkung der Umgebung vor oder während ihrer Verwendung mechanisch oder thermisch beansprucht wird bis sie reißt, beziehungsweise sich thermisch zersetzt. Letzteres kann beispielsweise bei der Wärmedämmung von Pipelines auf Grund der bis zu 180°C heißen Mediumtemperaturen geschehen, wobei durch eine geeignete Wahl des Materials der Umhüllung bei mehrschichtigem Aufbau des Formkörpers nur die Zersetzung der innen liegenden Schicht unter Erhalt des Vakuums in weiter außen liegenden Schichten erreicht werden kann.

Der zur Durchführung der Erfindung benötigte Formkörper wird vorzugsweise nach einem Verfahren hergestellt, das bereits in der DE-4432896 A1 beschrieben ist. Er besitzt auch vorzugsweise die dort genannte Zusammensetzung von 30 bis 100 Gew.-% feinteiligem Metalloxid,
0 bis 50 Gew.-% Trübungsmittel, 0 bis 50 Gew.-% Fasermaterial und 0 bis 15 Gew.-% anorganischem Bindemittel. Bevorzugt ist auch, Metalloxid, Fasermaterial, Trübungsmittel und Bindemittel unter den in der DE-4432896 A1 genannten Stoffen auszuwählen, wobei als Fasem auch organische Fasern, beispielsweise Viskosefasem in Frage kommen. Auch Füllstoffe wie Glimmer, Perlit oder Vermiculit können gegebenenfalls enthalten sein.

Nach der Herstellung des Formkörpers werden die Lamellen durch Fräs- oder Sägewerkzeuge, beispielsweise Blatt- oder Drahtsägen eingeschnitten und der Formkörper in eine Umhüllung eingebracht, evakuiert, und die Umhüllung verschlossen. Ein Bereitstellen von Kanalporen und Kanälen im Formkörper zur Beschleunigung des Evakuierens, wie es in der DE-4432896 A1 beschrieben ist, ist zweckmäßig, jedoch nicht zwingend notwendig.

### Beispiel 1:

Eine Platte mit den Maßen 965 mm ∗ 500 mm ∗ 20 mm wurde mit 50 parallelen Einschnitten im Abstand von 19,6 mm versehen. Die Einschnitte hatten eine Basisbreite von 2,5 mm. Die so erhaltene Platte wurde in einer Mehrschichtverbundfolie bei Drücken kleiner 200 mbar luftdicht eingeschweißt, wobei sich die ursprünglich ebene Platte bereits ein wenig krümmte und dadurch als Handlingshilfe bei der Montage wirkt; kürzere Montagezeiten können hierbei die Folge sein. Die Platte wurde anschließend mit der mit den Einschnitten versehenen Oberfläche auf ein Rohr montiert und mit Klebeband punktförmig fixiert. Anschließend wurde die Umhüllung mit einem spitzen Gegenstand eingeritzt und die am Rohr angeschmiegte Platte mit dem Klebeband fest umwickelt.

### Beispiel 2:

Ein bis zu mehreren Hundert Grad heißes Medium führendes Rohr wird mit drei Schichten aus evakuierten und in gasdichter Mehrschichtfolie eingeschweißten Platten mit einer auf der Oberfläche eingebrachten Lamellenstruktur mit einer Dicke von je 12 mm umhüllt, so daß die Stoßstellen stimseitig als auch im Umfang versetzt liegen. Jede einzelne Schicht wir mit Klebeband fixiert. In der Anwendung wird die erste Schicht auf Grund der Temperaturbeständigkeit der Umhüllungsfolie thermisch zersetzt, so daß der Abdichtungseffekt wirksam wird. Auf Grund der wärmeisolierenden Wirkung der ersten Schicht bleibt die Umhüllung der nächsten Schichten bestehen, was auf Grund der besonders guten Wärmedämmwirkung der evakuierten Systeme eine optimale Isolierwirkung ergibt.

## Patentansprüche

1. Verfahren zur Isolierung von gekrümmten Flächen mit einem plattenförmigen, evakuierten und wärmedämmenden Formkörper, der verpreßtes und gegebenenfalls gehärtetes, mikroporöses Isoliermaterial in einer oder mehreren umhüllten und evakuierten Schichten enthält und eine Oberfläche mit Lamellenstruktur aufweist, wobei die Lamellen eine Tiefe von 40 bis 95% der Dicke des Formkörpers besitzen, das dadurch gekennzeichnet ist, daß der Förmkörper mit der Oberfläche mit Lamellenstruktur an die gekrümmte Fläche angeschmiegt und fixiert wird und das Vakuum in mindestens einer Schicht aufgehoben wird.

2. Verfahren nach Anspruch 1, dadurch gekennzeichnet, daß der Formkörper durch Umwickeln mit einem Gewebeband, Klebeband, einer Kunststoff- oder Metallfolie oder mit zugeschnittenem Metallblech fixiert wird.

3. Verfahren nach Anspruch 1, dadurch gekennzeichnet, daß das Vakuum aufgehoben wird, indem die Umhüllung der Schicht mit einem Werkzeug beschädigt wird.

4. Verfahren nach Anspruch 1, dadurch gekennzeichnet, daß das Vakuum aufgehoben wird, indem die Umhüllung der Schicht teilweise thermisch zersetzt wird.

5. Verfahren nach Anspruch 1, dadurch gekennzeichnet, daß das Vakuum von mindestens einer Schicht bei mehrschichtigen Aufbauten aufgehoben wird, indem die Umhüllung mechanisch beansprucht wird, bis sie reißt.

6. Verfahren nach einem der Ansprüche 1 bis 5, dadurch gekennzeichnet, daß das Vakuum in der an die gekrümmte Fläche anliegenden Schicht aufgehoben wird und in mindestens einer anderen Schicht dauerhaft beibehalten wird.

7. Verfahren nach einem der Ansprüche 1 bis 6, dadurch gekennzeichnet, daß mit dem Formkörper Rohre, beispielsweise Pipelines für Rohöl und Femwärmeleitungen, Motoren, Turbinen und Kamine isoliert werden.

## Claims

1. Method of insulation for curved surfaces with a panel-shaped, evacuated and thermally insulating moulded element which contains pressed and possibly hardened, microporous insulating material in one or more sheathed and evacuated layers, and has a surface with a lamellar structure, the lamellae having a depth of 40 to 95% of the thickness of the moulded element, which is characterized in that the moulded element is made to fit with the surface with a lamellar structure snugly against the curved surface and is fixed and the vacuum is destroyed in at least one layer.

2. Method according to Claim 1, characterized in that the moulded element is fixed by wrapping around a woven-fabric tape, adhesive tape, a plastic film or metal foil or else a cut-to-size metal plate.

3. Method according to Claim 1, characterized in that the vacuum is destroyed by damaging the sheathing of the layer using an implement.

4. Method according to Claim 1, characterized in that the vacuum is destroyed by the sheathing of the layer partially being thermally decomposed.

5. Method according to Claim 1, characterized in that the vacuum of at least one layer in the case of multilayer structures is destroyed by the sheathing being mechanically stressed until it tears.

6. Method according to one of Claims 1 to 5, characterized in that the vacuum in the layer bearing against the curved surface is destroyed and the vacuum in at least one other layer is permanently preserved.

7. Mechod according to one of Claims 1 to 6, characterized in that, using the moulded element, pipes, for example pipelines for crude oil and district heating lines, engines, turbines and chimneys are insulated.

## Revendications

1. Procédé d'isolation de surfaces courbes avec un corps moulé en forme de plaque, mis sous vide et calorifuge qui contient un matériau d'isolation microporeux comprimé et, le cas échéant, durci, dans une ou plusieurs couches enveloppées et mises sous vide, et présente une surface à structure lamellaire, les lamelles possédant une -profondeur de 40 à 95% de l'épaisseur du corps moulé, qui est caractérisé en ce que le corps moulé avec la surface à structure lamellaire est adapté et fixé à la surface courbe et le vide est supprimé dans au moins une couche.

2. Procédé suivant la revendication 1, caractérisé en ce que le corps moulé est fixé par enroulement avec une bande en tissu, une bande adhésive, une feuille plastique ou métallique ou avec une tôle métallique coupée à dimension.

3. Procédé suivant la revendication 1, caractérisé en ce qu'on supprime le vide en endommageant l'enveloppe de la couche avec un outil.

4. Procédé suivant la revendication 1, caractérisé en ce qu'on supprime le vide en détruisant l'enveloppe de la couche partiellement de façon thermique.

5. Procédé suivant la revendication 1, caractérisé en ce qu'on supprime le vide d'au moins une couche en cas de structures multicouches en soumettant l'enveloppe à une contrainte mécanique jusqu'à ce qu'elle se déchire.

6. Procédé suivant l'une des revendications 1 à 5, caractérisé en ce que le vide est supprimé dans la couche adjacente à la surface courbe et est durablement conservé dans au moins une autre couche.

7. Procédé suivant l'une des revendications 1 à 6, caractérisé en ce que, grâce au corps moulé, on isole des tubes, par exemple des pipelines pour du pétrole brut et des conduites de chaleur à grande distance, des moteurs, des turbines et des cheminées.
